# EUROPÄISCHE PATENTANMELDUNG

(11) **EP 4 759 121 A1**
(43) Veröffentlichungstag der Anmeldung: **17.06.2026**
(21) Anmeldenummer: 25211928.4
(22) Anmeldetag: 29.10.2025
(51) Int. Cl.: A01D 43/08, A01D 43/14

(54) **VERFAHREN ZUR AUFBEREITUNG VON LANDWIRTSCHAFTLICHEM ERNTEGUT**

(30) Priorität: 16.12.2024 DE 102024138104
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig Dr., Ingo, 33330 Gütersloh (DE); Brune, Markus, 33428 Harsewinkel (DE); Titkemeier, Daniel, 49080 Osnabrück (DE); Dirksen, Matthis, 48231 Warendorf (DE)
(74) Vertreter: CLAAS Gruppe

(57) **Zusammenfassung**

Die vorliegende Erfindung betrifft ein Verfahren zur Aufbereitung von landwirtschaftlichem Erntegut (20), welches als Gutstroms durch zumindest ein Arbeitsaggregat (3, 4, 5, 6) einer landwirtschaftlichen Erntemaschine (1), insbesondere eines Feldhäckslers (30), gefördert wird, wobei dem Erntegutstrom zumindest ein dessen Qualität begünstigendes Siliermittel (11) durch eine entlang des Erntegutstromverlaufes angeordnete Siliermittelanlage (26) zugegeben wird und wobei zumindest zwei Eigenschaften des Ernteguts (20) durch zumindest eine Sensoranordnung (28) erfasst und von einer Steuerungsvorrichtung (16) ausgewertet werden, um eine Dosiermenge (D) des zumindest einen Siliermittels (11) in Abhängigkeit der erfassten Eigenschaften des Ernteguts (20) zu dosieren, wobei die Einstellung der Dosiermenge (D) des zumindest einen Siliermittels (11) fortlaufend in Abhängigkeit vom durch die Steuerungsvorrichtung (16) bestimmten Trockenmassegehalt (35) und einem Gehalt an erdigen Verunreinigungen (36) im Erntegut durchgeführt wird.

## Beschreibung

Die vorliegende Erfindung betrifft ein Verfahren zur Aufbereitung von landwirtschaftlichem Erntegut gemäß dem Oberbegriff des Anspruches 1. Weiterhin sind eine Siliermittelanlage für eine landwirtschaftliche Erntemaschine gemäß dem Oberbegriff des Anspruches 14 sowie eine landwirtschaftliche Erntemaschine gemäß dem Oberbegriff des Anspruches 15 Gegenstand der vorliegenden Erfindung.

In der landwirtschaftlichen Erntetechnik zählt die Applikation von in Wasser gelösten Siliermitteln, von Siliermittelkonzentraten oder von Granulaten, zum Erntegut zum Verfahren der Aufbereitung bzw. Behandlung von Erntegut. Aus dem Stand der Technik sind landwirtschaftliche Erntemaschinen, beispielsweise Ladewagen, Ballenpressen oder selbstfahrende Feldhäcksler, bekannt, bei denen dem jeweils in Form eines Gutstroms durch ein Arbeitsaggregat der Erntemaschine geförderten Erntegut derartige Siliermittel kontinuierlich zugegeben werden, um allgemein die Qualität des Ernteguts während eines späteren Silierprozesses zu begünstigen. Dabei können mit der Zugabe von in Wasser gelösten Siliermitteln verschiedene der nachfolgenden Wirkungen angestrebt werden: verbesserte Vergärung des Ernteguts, Erhöhung der Haltbarkeit unter Lufteinfluss, Reduzierung des Grassaftablaufs, Verbesserung bei der späteren Verfütterung hinsichtlich der Futteraufnahme, Verdaulichkeit, Mast- und Milchleistung, Verhinderung von Clostridien. Je nach verfolgtem Zweck ist der Einsatz unterschiedlicher Siliermittel bekannt, beispielsweise der Einsatz von Säuren (z.B. Milchsäure) oder von zuckerhaltigen Flüssigkeiten (z.B. Melasse) oder einem Siliermittel, welches Clostridien aktiv hemmt.

Aufgrund der immer kürzer werdenden Ernteperioden und den sich ändernden klimatischen Bedingungen wird es für den Landwirt immer schwieriger den Erntezeitpunkt so zu wählen, dass das Erntegut den optimalen Trockenmassegehalt hat. Des Weiteren lassen sich erdige Verunreinigungen aufgrund von Wildtierschäden auch bei optimalen Maschineneinstellungen nicht immer vermeiden. Aus diesem Grund ist es für den Landwirt wichtig, mit Hilfe von Siliermitteln reagieren zu können, wenn die beiden zuvor angesprochenen Parameter nicht im optimalen Bereich liegen. Nur so kann der Landwirt sicherstellen, dass auch unter schwierigen Bedingungen trotzdem noch eine zufriedenstellende Futterqualität erreicht werden kann.

Durch den Eintrag an erdiger Verunreinigung wird die Bildung von Buttersäure im Silo begünstigt. Allerdings sinkt die Silagequalität mit steigendem Anteil an Buttersäure und im schlimmsten Fall kann es bei einem zu hohen Anteil an Buttersäure zur Fehlgärung der Silage kommen. Ursache hierfür kann sein, dass auf dem Siliergut zu wenig Milchsäurebakterien vorhanden waren. Umweltfaktoren wie Trockenheit, Starkregen oder Nachtfröste können das Wachstum der Bakterien auf dem Gras stark hemmen. Dadurch können zum Schnittzeitpunkt zu wenig Milchsäurebakterien vorhanden sein. Infolge werden nur geringe Mengen an Milchsäure in der Silage gebildet, die nicht ausreichen, um Clostridien und deren Fehlgärungen zu unterdrücken. Durch den gezielten Einsatz von biologischen Siliermitteln, die Milchsäurebakterien beinhalten, kann dieses Risiko im Vorhinein minimiert werden. Durch das Einbringen von Milchsäurebakterien durch eine entlang des Erntegutstromverlaufes angeordnete Siliermittelanlage kann die Gärqualität in solchen Situationen positiv beeinflusst werden.

Das Auftreten von erdiger Verunreinigung im Erntegut kann unter anderem auf Witterungseinflüsse, Wildtierschaden und/oder vorangehende Bearbeitungsvorgänge auf der zu bearbeitenden Fläche zurückgehen. Dabei kann erdige Verunreinigung, insbesondere dann, wenn sie durch Wildtierschäden verursacht ist, sehr stark variieren. Beispielsweise ist nur eine von mehreren Flächen von Wildtieren geschädigt worden oder gar nur eine Teilfläche. Oder aber auf vielen Flächen sind nur sehr vereinzelt kleine Schäden vorhanden.

Der Erfindung liegt somit die Aufgabe zugrunde, ein Verfahren der eingangs genannten weiterzubilden, welches einen effektiven Einsatz von Siliermitteln ermöglicht, um damit eine möglichst gleichbleibende, zuverlässig hohe Qualität des geernteten Gutes zu gewährleisten.

Die vorliegende Aufgabe wird durch ein Verfahren zur Aufbereitung von landwirtschaftlichem Erntegut mit den Merkmalen des Anspruches 1 gelöst. Weiterhin wird die Aufgabe durch eine Siliermittelanlage für eine landwirtschaftliche Erntemaschine mit den Merkmalen des nebengeordneten Anspruchs 14 gelöst.

Vorteilhafte Weiterbildungen sind Gegenstand der abhängigen Ansprüche.

Gemäß dem Anspruch 1 wird ein Verfahren zur Aufbereitung von landwirtschaftlichem Erntegut vorgeschlagen, wobei das Erntegut als Gutstroms durch zumindest ein Arbeitsaggregat einer landwirtschaftlichen Erntemaschine, insbesondere eines Feldhäckslers, gefördert wird, wobei dem Erntegutstrom zumindest ein dessen Qualität begünstigendes Siliermittel durch eine entlang des Erntegutstromverlaufes angeordnete Siliermittelanlage zugegeben wird und wobei zumindest zwei Eigenschaften des Ernteguts durch zumindest eine Sensoranordnung erfasst und von einer Steuerungsvorrichtung ausgewertet werden, um die Dosiermenge des zumindest einen Siliermittels in Abhängigkeit der erfassten Eigenschaften des Ernteguts zu dosieren. Erfindungsgemäß ist vorgesehen, dass die Einstellung der Dosiermenge des zumindest einen Siliermittels in Abhängigkeit vom durch die Steuerungsvorrichtung bestimmten Trockenmassegehalt und einem Gehalt an erdigen Verunreinigungen im Erntegut durchgeführt wird.

Wesentlich ist die Überlegung, dass der Trockenmassegehalt des Erntegutes einerseits und der Gehalt an erdigen Verunreinigungen im Erntegut andererseits die maßgeblichen Einflussparameter sind, welche die Qualität der Silage bestimmen. Durch die kontinuierliche Einstellung der Dosiermenge des zumindest einen Siliermittels wird erreicht, dass auch unter schwierigen Bedingungen, d.h. wenn ein oder beide Einflussparameter nicht im optimalen Bereich liegt bzw. liegen, trotzdem noch eine zufriedenstellende Futterqualität erreicht werden kann. Abweichungen im Trockenmassegehalt und/oder im Gehalt an erdigen Verunreinigungen im Erntegut vom optimalen Trockenmassegehalt und/oder dem Gehalt an erdigen Verunreinigungen werden durch die angepasste Dosiermenge des zumindest einen Siliermittels zumindest soweit kompensiert, dass eine zufriedenstellende Futterqualität erreicht werden kann.

Die Einstellung der Dosiermenge des zumindest einen Siliermittels in Abhängigkeit vom durch die Steuerungsvorrichtung kontinuierlich bestimmten Trockenmassegehalt und dem Gehalt an erdigen Verunreinigungen im Erntegut hat unter anderem den Effekt, dass sich beide Parameter, Trockenmassegehalt und einem Gehalt an erdigen Verunreinigungen, während eines Erntetages deutlich verändern können. So kann beispielsweise der Trockenmassegehalt morgens bei Ernteprozessbeginn noch niedrig sein und unterhalb des empfohlenen Wertebereichs liegen. Gegen Nachmittag hingegen kann aufgrund der längeren Trockenzeit der Trockenmassegehalt sogar oberhalb des Empfehlungsmaßes liegen. Somit wird durch das erfindungsgemäße Verfahren untertägig auf sich ändernde Bedingungen reagiert.

Gemäß einer bevorzugten Weiterbildung kann die Dosiermenge des zumindest einen Siliermittels mittels der Siliermittelanlage durch die Steuerungsvorrichtung in Abhängigkeit von einem in der Steuerungsvorrichtung hinterlegten und/oder durch die Steuerungsvorrichtung zu bestimmenden dreidimensionalen Kennfeld angesteuert werden, in welchem die Dosiermenge des zumindest einen Siliermittels in Abhängigkeit vom Trockenmassegehalt und dem Gehalt an erdigen Verunreinigungen aufgetragen ist.

Insbesondere kann zur Bestimmung des dreidimensionalen Kennfeldes eine minimale Dosiermenge und eine maximale Dosiermenge vorgegeben werden. Die Vorgabe der minimalen Dosiermenge und maximalen Dosiermenge bilden Regelgrenzen, die der Bestimmung des dreidimensionalen Kennfeldes zugrunde liegen.

Hierzu kann die Vorgabe der minimalen Dosiermenge und maximalen Dosiermenge manuell mittels einer Benutzerschnittstelle durchgeführt werden. Ein Bediener der Erntemaschine kann mittels der Benutzerschnittstelle die minimale und maximale Dosiermenge vorgeben. Die Vorgabe der minimalen und maximalen Dosiermenge kann dabei auf Erfahrungswerten des Bedieners und/oder Empfehlungen des Herstellers des Siliermittels beruhen.

Alternativ oder zusätzlich kann durch die Steuerungsvorrichtung in Abhängigkeit von spezifischen Eigenschaften des zumindest einen Siliermittels zumindest eine Empfehlung für die minimale Dosiermenge und die maximale Dosiermenge vorgegeben werden. Die zumindest eine Empfehlung kann beispielsweise auf historischen Werten für die jeweilige zu bearbeitende Fläche basieren, die beispielsweise durch die Steuerungsvorrichtung abrufbar in einem Farmmanagementsystem hinterlegt sein können.

Bevorzugt kann der Erntegutstrom zur Bestimmung der Eigenschaft Trockenmassegehalt des Erntegutes durch einen NIR-Sensor und zur Bestimmung der Eigenschaft Gehalt an erdigen Verunreinigungen im Erntegut durch eine Kamera optisch erfasst werden.

Gemäß einer bevorzugten Weiterbildung können die Eigenschaft Trockenmassegehalt und Gehalt an erdigen Verunreinigungen im Erntegut zeitgleich durch den NIR-Sensor und die Kamera, die nebeneinander in einem Gehäuse angeordnet sind, erfasst werden, wobei das Gehäuse an einer zur Abgabe des Erntegutes ausgeführten Überladevorrichtung der Erntemaschine angeordnet ist. Durch die Integration des NIR-Sensors und der Kamera in einem gemeinsamen Gehäuse erfassen diese das die Überladevorrichtung durchströmende Erntegut gleichzeitig, sodass die durch die Auswertung durch die Steuerungsvorrichtung bestimmten Werte für den Trockenmassegehalt und den Gehalt an erdigen Verunreinigungen im Erntegut im Wesentlichen demselben Erntegut zugeordnet werden können.

Insbesondere kann der Gehalt an erdigen Verunreinigungen im Erntegut mittels einer Bildauswerteeinheit der Steuerungsvorrichtung durchgeführt werden, wobei das Vorhandensein und der Gehalt an erdigen Verunreinigungen durch die Bildauswerteeinheit mittels eines Maschinenlernalgorithmus bestimmt wird. Mittels des Maschinenlernalgorithmus können von der Kamera übertragene Bilddaten im laufenden Erntebetrieb automatisch durch die Bildauswertungsvorrichtung analysiert werden. Dies ermöglicht eine kostengünstige und schnelle Qualifizierung und Quantifizierung des Gehaltes an erdigen Verunreinigungen. Insbesondere kann die Analyse durch die Bildauswertungsvorrichtung in Echtzeit durchgeführt werden.

Bevorzugt kann zur Analyse von durch die Kamera erzeugten Bilddaten des Erntegutes durch den Maschinenlernalgorithmus zumindest ein trainierbares neuronales Netzwerk verwendet werden. Insbesondere kann das zumindest eine neuronale Netzwerk als Basis ein EfficientNet, insbesondere EfficientNetB0, als Architektur und Skalierungsmethode für faltungsneuronale Netze verwenden. Neuronale Faltungsnetzwerke oder auch Convolutional Neural Network (CNN) wie das EfficientNet erzielen in der Bildverarbeitung besonders gute Ergebnisse.

Insbesondere kann die Abgabe der minimalen Dosiermenge in Abhängigkeit von einem optimalen Wert für den Trockenmassegehalt und eines ersten Schwellwertes für den Gehalt an erdigen Verunreinigungen angesteuert werden. So kann als optimaler Wert für den Trockenmassegehalt ein Wert von 35% vorgesehen sein. Der optimale Wert für den Trockenmassegehalt kann mittels der Benutzerschnittstelle angepasst werden. Als erster Schwellwert für den Gehalt an erdigen Verunreinigungen kann bevorzugt 0% vorgesehen sein.

Weiterhin kann die Abgabe der maximalen Dosiermenge in Abhängigkeit vom Überschreiten eines ersten, vom optimalen Wert abweichenden, Schwellwertes für den Trockenmassegehalt und des ersten Schwellwertes für den Gehalt an erdigen Verunreinigungen angesteuert werden. Die maximale Dosiermenge soll zum Einsatz kommen, wenn das Erntegut sehr nass ist und erdige Verunreinigungen aufweist. Hierdurch kann der Gefahr von Fehlgärungen während des Silierprozesses entgegengewirkt werden.

Des Weiteren kann die Abgabe einer mittleren Dosiermenge, die mittels des Kennfeldes quantifiziert wird, in Abhängigkeit vom Überschreiten des ersten Schwellwertes für den Trockenmassegehalt und dem Unterschreiten des ersten Schwellwertes für den Gehalt an erdigen Verunreinigungen angesteuert werden.

Ebenso kann die Abgabe einer mittleren Dosiermenge, die mittels des Kennfeldes quantifiziert wird, in Abhängigkeit von der Einhaltung des optimalen Wertes für den Trockenmassegehalt und dem Überschreiten des ersten Schwellwertes für den Gehalt an erdigen Verunreinigungen angesteuert werden.

Die Ansteuerung der Siliermittelanlage in der Weise, dass eine mittlere Dosiermenge abgegeben wird, erfolgt als Reaktion auf die Erntesituation, dass nichtverschmutztes, aber nasses Erntegut oder verschmutztes, aber den optimalen Trockenmassegehalt aufweisendes Erntegut durch die Erntemaschine aufgenommen und bearbeitet wird.

Die eingangs gestellte Aufgabe wird weiterhin durch eine Siliermittelanlage gemäß dem nebengeordneten Anspruch 14 gelöst.

Gemäß dem Anspruch 14 wird eine Siliermittelanlage für eine landwirtschaftliche Erntemaschine, insbesondere einen Feldhäcksler vorgeschlagen, wobei die Siliermittelanlage zumindest einen Behälter für zumindest ein Siliermittel, eine Mischeinheit, eine Förderpumpe sowie eine Injektoreinheit zur Abgabe des zumindest einen Siliermittels aufweist, wobei zur Ansteuerung der Mischeinheit eine Steuerungsvorrichtung vorgesehen ist, wobei zur Erfassung zumindest zweier Eigenschaften des Ernteguts zumindest eine Sensoranordnung vorgesehen ist, deren Daten von der Steuerungsvorrichtung ausgewertet werden, um die von der Mischeinheit abgegebene Dosiermenge des zumindest einen Siliermittels in Abhängigkeit der zumindest zwei erfassten Eigenschaften des Ernteguts zu dosieren, wobei die Steuerungsvorrichtung dazu eingerichtet und ausgeführt ist, die Einstellung der Dosiermenge des zumindest einen Siliermittels in Abhängigkeit vom durch die Steuerungsvorrichtung bestimmten Trockenmassegehalt und einem Gehalt an erdigen Verunreinigungen im Erntegut durchzuführen. Auf die erfindungsgemäßen Ausführungen zum Verfahren zur Aufbereitung von landwirtschaftlichem Erntegut darf verwiesen werden.

Weiterhin wird eine landwirtschaftliche Erntemaschine mit den Merkmalen des Anspruches 15 beansprucht.

Gemäß dem Anspruch 15 wird eine landwirtschaftliche Erntemaschine, insbesondere ein Feldhäcksler, vorgeschlagen, welche einen Gutstrom mit Erntegut durch zumindest ein Arbeitsaggregat durch die Erntemaschine fördert, wobei dem Erntegutstrom eine entlang des Erntegutstromverlaufes angeordnete Siliermittelanlage zumindest ein dessen Qualität begünstigendes Siliermittel zugibt und wobei zur Erfassung zumindest zwei Eigenschaften des Ernteguts zumindest eine Sensoranordnung vorgesehen ist, welche Daten einer Steuerungsvorrichtung zur Auswertung zuführt, um die Dosiermenge des zumindest einen Siliermittels in Abhängigkeit der erfassten Eigenschaften des Ernteguts zu dosieren, wobei die Erntemaschine zur Durchführung des Verfahrens nach einem der Ansprüche 1 bis 13 eingerichtet und die Siliermittelanlage nach Anspruch 14 ausgeführt ist.

Die vorliegende Erfindung wird nachstehend anhand eines in den Zeichnungen dargestellten Ausführungsbeispieles näher erläutert.

Es zeigen:
- Fig. 1: schematisch und exemplarisch eine landwirtschaftliche Erntemaschine;
- Fig. 2: schematisch und exemplarisch eine Darstellung einer Steuerungsvorrichtung zur Ansteuerung einer Siliermittelanlage;
- Fig. 3: exemplarisch ein dreidimensionales Kennlinienfeld zur Einstellung einer Dosiermenge für Siliermittel;

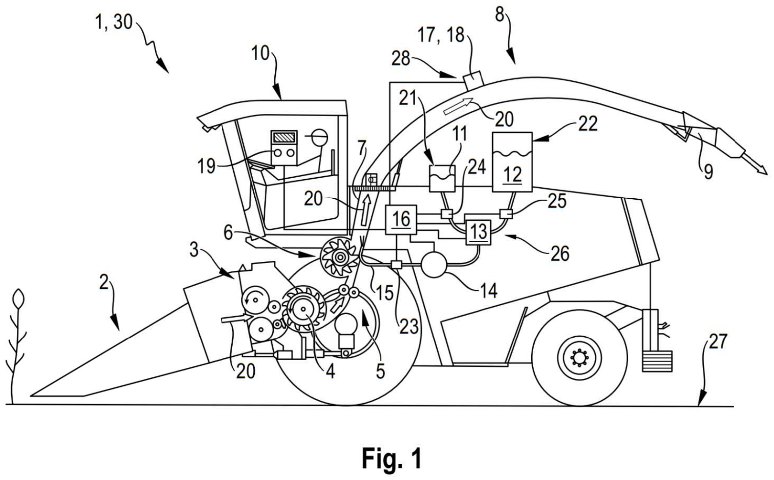

Fig. 1 zeigt beispielhaft eine erfindungsgemäße landwirtschaftliche Erntemaschine 1 in Form eines selbstfahrenden Feldhäckslers 30. Die landwirtschaftliche Erntemaschine 1 ist zur Durchführung des erfindungsgemäßen Verfahrens ausgeführt und eingerichtet. Es sei darauf hingewiesen, dass die Erfindung unter Erzielung vergleichbarer Effekte und Vorteile auch an anderen einen Erntegutstrom verarbeitenden Erntemaschinen umsetzbar ist, beispielsweise an Ladewagen oder Ballenpressen.

Der Feldhäcksler 30 schneidet bei der Erntefahrt mittels eines frontseitig am Maschinenrahmen angeordneten Vorsatzgerätes 2 Pflanzenmaterial von einer zu bearbeitenden Fläche 27 ab und führt das so gewonnene Erntegut 20 (Förderweg durch die Maschine angedeutet durch Pfeile) einem mit mehreren Vorpresswalzen ausgestatteten Einzugsaggregat 3 zu. Nach dortiger Vorpressung gelangt das Erntegut 20 zur Häckseltrommel 4, die das Erntegut 20 unter Zusammenwirkung mit einer feststehenden Gegenschneide (nicht bezeichnet) zerkleinert. Durch einen hinter der Häckseltrommel 4 aufsteigenden Förderschacht 7 tritt das gehäckselte Erntegut 20 nach Bearbeitung durch eine Konditioniereinrichtung 5 (optional) und zusätzlicher Beschleunigung durch einen Nachbeschleuniger 6 in eine bogenförmig gekrümmte Überladeeinrichtung 8 ein, um durch deren maschinenabgewandte Auswurfklappe 9 zur Beladung eines Sammelbehälters aus dem Feldhäcksler 30 ausgeworfen zu werden.

Das ausgeworfene Erntegut 20 wird in der Praxis oftmals einem Silierprozess unterzogen, um es für eine spätere Verfütterung an Nutztiere zu konservieren und/oder allgemein zu veredeln. Zum Auslösen bzw. zur effektiven Aufrechterhaltung des Silierprozesses und damit zum Erzielen eines guten Ergebnisses des Silierprozesses sind bestimmte Eigenschaften des Ernteguts erforderlich, welche gewünschte biologische bzw. chemische Vorgänge im Erntegut 20 begünstigen. Da diese Eigenschaften nicht immer natürlich vorliegen, verfügt der Feldhäcksler 30 über eine Siliermittelanlage 26 zum Einbringen zumindest eines Hilfsmittels, welches den Silierprozess und damit die Qualität des Ernteguts 20 begünstigt.

Hierzu weist der Feldhäcksler 30 zwei Behälter 21, 22 auf, die mit unterschiedlichen Hilfsmitteln befüllt bzw. befüllbar sind. Der eine Behälter 21 ist mit einem flüssigen Siliermittel 11 gefüllt, das beispielsweise Milchsäurebakterien enthält. Der Behälter 21 ist vorteilhaft thermisch isoliert, um Temperaturerhöhungen des Siliermittels 11 und damit ein Absterben der Milchsäurebakterien zu verhindern. Der weitere Behälter 22 ist mit Wasser 12 gefüllt. Behälterunterseitig sind jeweils Ablauföffnungen vorgesehen, um die Behälter 21, 22 jeweils mittels einer Leitung mit einer gemeinsamen Mischeinheit 13 zu verbinden. An jeder der Leitungen zwischen den Behältern 21, 22 und der Mischeinheit 13 ist ein Durchflussmesser 24 bzw. 25 vorgesehen, der den jeweiligen Durchfluss durch die Leitung und damit den Abfluss aus den beiden Behältern 21, 22 erfasst. Die Durchflussmesser 24, 25 übermitteln entsprechende Durchflussmengensignale an eine zentrale Steuerungsvorrichtung 16.

Die Mischeinheit 13 ist ebenfalls mit der zentralen Steuerungsvorrichtung 16 signalverbunden, um von dieser angesteuert zu werden. Auf Basis empfangener Steuersignale ist die Mischeinheit 13 in der Lage, die Durchflussmengen der in den Behältern 21, 22 enthaltenen Hilfsmittel Siliermittel 11 und Wasser 12 durch die jeweiligen Leitungen zur Mischeinheit 13 in einem Bereich von 0% bis 100% im Sinne einer Mischbatterie beliebig zu drosseln. Auf diese Weise kann die Mischeinheit 13 die Hilfsmittel Siliermittel 11 und Wasser 12 in beliebig einstellbarem Verhältnis mischen. Im einen Extremfall tritt reines Siliermittel 11, im anderen Extremfalls tritt reines Wasser 12 aus einem abgabeseitigen Auslass der Mischeinheit 13 aus. Dazwischen sind beliebige Mischverhältnisse einstellbar. Auch eine vollständige Sperrung der Mischeinheit 13 ist möglich, falls aufgrund der Erntebedingungen keines der beiden Hilfsmittel 11, 12 erforderlich ist. Im Regelfall wird eine durch die Mischeinheit 13 einstellbare Dosiermenge D des Siliermittels 11 dem weiteren Hilfsmittel Wasser 12 zugeführt.

Eine Förderpumpe 14 mit veränderlicher Förderleistung ist über eine Leitung mit dem abgabeseitigen Auslass der Mischeinheit 13 verbunden, um das Gemisch der beiden Hilfsmittel 11, 12 gemäß an der Förderpumpe 14 angezeigter Pfeilrichtung zunächst durch einen weiteren Durchflussmesser 23 für die Gesamtdurchflussmenge der beiden Hilfsmittel 11, 12 und schließlich durch einen im Förderschacht 7 endenden, sich in Stromrichtung des Ernteguts 20 öffnenden Injektor 15 zu fördern, wodurch das Gemisch in fein verspritzter Form auf das vorbeiströmende Erntegut 20 appliziert wird.

Auch die Förderpumpe 14 ist mittels der Steuerungsvorrichtung 16 ansteuerbar, so dass sich die Gesamtdurchflussmenge des Flüssigkeitsgemischs, das durch den Injektor 15 dem Erntegut 20 zugeführt wird, durch Veränderung der Förderleistung steuern lässt. Der Durchflussmesser 23, dessen Durchflussmengensignal an die Steuerungsvorrichtung 16 übermittelt wird, dient als Rückkopplung für die Regelung der Gesamtmenge.

Zur selbsttätigen Einstellung einer effektiven Dosierung von zugegebenen Hilfsmitteln 11, 12 verfügt der Feldhäcksler 30 über zumindest eine Sensoranordnung 28 zur Erfassung von zumindest zwei Eigenschaften des Ernteguts 20. Diese umfasst einen NIR-Sensor 17 und eine Kamera 18, die an der Rückwand der Überladeeinrichtung 8 angeordnet sind. Die zumindest eine Sensoranordnung 28 ist mit der Steuerungsvorrichtung 16 signaltechnisch verbunden.

Mittels des NIR-Sensors 17 wird als eine der zumindest zwei Eigenschaften ein Trockenmassegehalt des Erntegutes 20 detektiert. Durch die Kamera 18 wird als zweite Eigenschaft ein Gehalt an erdigen Verunreinigungen im Erntegut 20 detektiert. Die jeweiligen Signale bzw. Daten des NIR-Sensors 17 sowie der Kamera 18 werden der Steuerungsvorrichtung 16 zur Auswertung zugeführt.

Der Feldhäcksler 30 verfügt weiterhin über eine Fahrerkabine 10, in der eine mit der Steuerungsvorrichtung 16 in Kommunikationsverbindung stehende Benutzerschnittstelle 19, wie ein Bedienterminal, für einen Bediener zugänglich angeordnet ist. Durch die Benutzerschnittstelle 19 lassen sich sämtliche Einstellungen für die Hilfsmittelzugabe vornehmen. Insbesondere können mittels der Benutzerschnittstelle manuell Regelgrenzen, eine minimale Dosiermenge Dₘᵢₙ sowie eine maximale Dosiermenge Dₘₐₓ, für eine automatische Dosierung gesetzt werden. Vorteilhaft kann der Bediener dabei zwischen unterschiedlichen Erntegutarten auswählen. Alternativ könnte in einem Vollautomatikmodus die Erntegutart beispielsweise mittels der Kamera 18 der zumindest einen Sensoranordnung 28 selbständig erkannt werden, wodurch eine manuelle Auswahl durch den Bediener entfiele.

Alternativ kann durch die Steuerungsvorrichtung 16 in Abhängigkeit von spezifischen Eigenschaften des zumindest einen Siliermittels 11 zumindest eine Empfehlung für die minimale Dosiermenge Dₘᵢₙ und die maximale Dosiermenge Dₘₐₓ als Regelgrenzen vorgegeben werden. Die zumindest eine Empfehlung kann beispielsweise auf historischen Werten für die jeweilige zu bearbeitende Fläche 27 basieren. Die historischen Werte für die jeweilige zu bearbeitende Fläche 27 können beispielsweise durch die Steuerungsvorrichtung 16 abrufbar in einem Farmmanagementsystem oder einer sonstigen externen Datenquelle hinterlegt sein.

Erfindungsgemäß ist vorgesehen, dass die Einstellung der Dosiermenge D des zumindest einen Siliermittels 11 fortlaufend in Abhängigkeit vom durch die Steuerungsvorrichtung 16 bestimmten Trockenmassegehalt und einem bestimmten Gehalt an erdigen Verunreinigungen im Erntegut 20 durchgeführt wird.

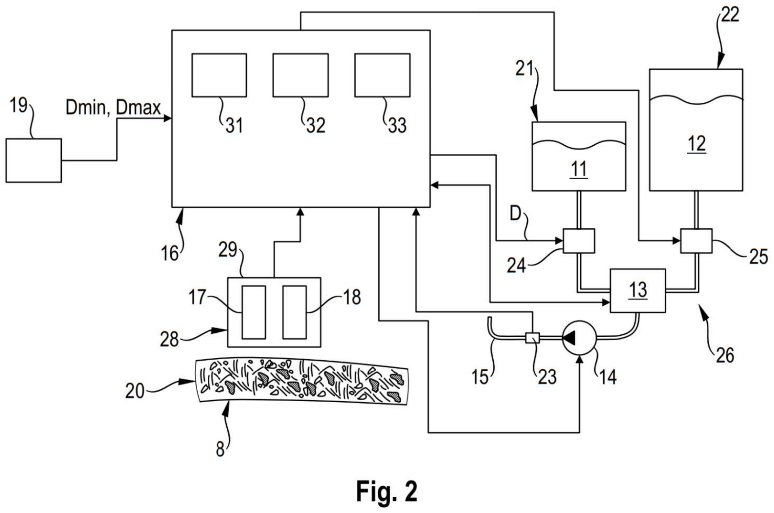

Fig. 2 zeigt schematisch und exemplarisch eine Darstellung der Steuerungsvorrichtung 16 zur Ansteuerung der Siliermittelanlage 26.

Der durch die Überladeeinrichtung 8 transportierte Erntegutstrom wird zur Bestimmung der Eigenschaft Trockenmassegehalt 35 des Erntegutes 20 durch den NIR-Sensor 17 und zur Bestimmung der Eigenschaft Gehalt an erdigen Verunreinigungen 36 im Erntegut 20 durch die Kamera 18 erfasst.

Der NIR-Sensor 17 und die Kamera 18 sind im dargestellten Ausführungsbeispiel in einem gemeinsamen Gehäuse 29 auf der Oberseite der Überladeeinrichtung 8 angeordnet. Die von dem NIR-Sensor 17 generierten Signale bzw. die von der Kamera 18 generierten Bilddaten können der Steuerungsvorrichtung 16 zur Auswertung zugeführt werden. Die Steuerungsvorrichtung 16 umfasst hierzu eine Recheneinheit 31, eine Speichereinheit 32 sowie eine Bildauswerteeinheit 33. Der NIR- Sensor 17 und die Kamera 18 können auch voneinander separiert in zwei Gehäusen angeordnet sein.

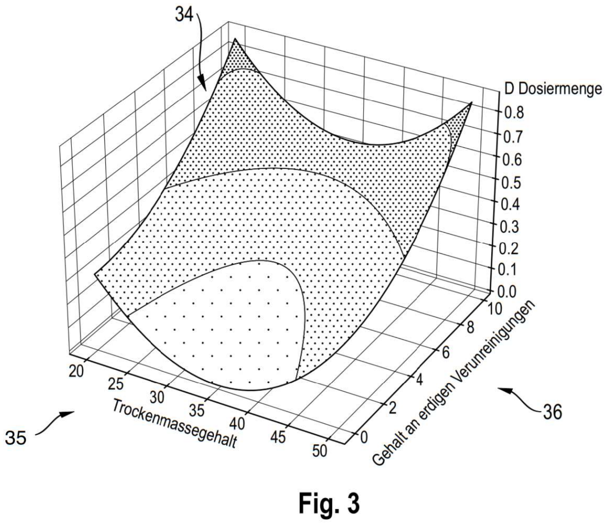

In der Speichereinheit 32 ist zumindest ein dreidimensionalen Kennfeld 34 hinterlegt oder hinterlegbar, welches in Fig. 3 exemplarisch dargestellt ist. Weiterhin kann in der Speichereinheit 32 zumindest ein Bildauswertealgorithmus hinterlegt oder hinterlegbar sein, welcher durch die Bildauswerteeinheit 33 ausgeführt wird, um den Gehalt an erdigen Verunreinigungen 36 im Erntegut 20 durch die Analyse der Bilddaten zu bestimmen.

Gemäß einer alternativen Ausführungsform kann die Kamera 18 dazu eingerichtet sein, mittels zumindest eines in einer Speichereinheit der Kamera 18 hinterlegten oder hinterlegbaren und durch eine Recheneinheit der Kamera 18 ausführbaren Bildauswertealgorithmus den Gehalt an erdigen Verunreinigungen 36 im Erntegut 20 durch die Analyse der Bilddaten zu bestimmen, wie weiter unten ausgeführt wird. Die Kamera 18 kann die Aufgabe der Bildauswertung mittels des Bildauswertealgorithmus anstelle der Steuerungsvorrichtung 16 übernehmen. Das Ergebnis der Analyse kann dann von der Kamera 18 an die Steuerungsvorrichtung 16 zur Ansteuerung der Mischeinheit 13 übertragen werden.

Die Dosiermenge D des zumindest einen Siliermittels 11 wird mittels der Siliermittelanlage 26 durch die Steuerungsvorrichtung 16 in Abhängigkeit von dem zumindest einen in der Steuerungsvorrichtung 16 hinterlegten und/oder durch die Steuerungsvorrichtung 16 zu bestimmenden dreidimensionalen Kennfeld 34 angesteuert. In dem zumindest einen Kennfeld 34 ist die Dosiermenge D des zumindest einen Siliermittels 11 in Abhängigkeit vom Trockenmassegehalt 35 und dem Gehalt an erdigen Verunreinigungen 36 aufgetragen.

Die Bestimmung des Kennfeldes 34 durch die Steuerungsvorrichtung 16 kann auf Grundlage der Eingabe von minimaler Dosiermenge Dₘᵢₙ und maximaler Dosiermenge Dₘₐₓ durch den Bediener der Erntemaschine 1 erfolgen. Dem Kennfeld 34 liegen zur Bestimmung mehrere Annahmen zu Grunde. Zum einen wird die minimale Dosiermenge Dₘᵢₙ des Siliermittels 11 in das Erntegut 20 abgegeben, wenn der Trockenmassegehalt 35 bei einem optimalen Wert liegt und nahezu keine erdige Verunreinigung detektiert wurde. Motivation hierfür ist, dass diese Parameterkombination optimal für eine hochwertige Silage ist und nur eine sehr geringe vom Bediener vorgegebene Dosiermenge D notwendig ist. So kann die Abgabe der minimalen Dosiermenge Dₘᵢₙ in Abhängigkeit von der Einhaltung des optimalen Wertes für den Trockenmassegehalt 35 und eines ersten Schwellwertes für den Gehalt an erdigen Verunreinigungen 36 angesteuert werden. Der optimale Wert für den Trockenmassegehalt 35 kann im Bereich um 35% liegen. Der erste Schwellwert für den Gehalt an erdigen Verunreinigungen 36 ist bevorzugt kleiner 1%, insbesondere kleiner 0,5%.

Zum anderen wird eine maximale Dosiermenge Dₘₐₓ bei sehr nassem und sehr verschmutztem Erntegut 20 abgegeben, da bei dieser Parameterkombination die Gefahr von Fehlgärung der Silage am höchsten ist und eine entsprechend vom Bediener vorgegebene maximale Menge Dₘₐₓ an Siliermittel 11 benötigt wird. Hierbei kann die Abgabe der maximalen Dosiermenge Dₘₐₓ in Abhängigkeit vom Überschreiten eines ersten Schwellwertes für den Trockenmassegehalt 35, der vom optimalen Wert abweicht, und des ersten Schwellwertes für den Gehalt an erdigen Verunreinigungen 36 angesteuert werden. Der erste Schwellwert für den Trockenmassegehalt 35 ist größer als der optimale Wert für den Trockenmassegehalt 35.

Des Weiteren wird eine mittlere Dosiermenge bei nahezu unverschmutztem aber nassem Erntegut 20 dosiert. Außerdem wird eine mittlere Dosiermenge bei optimalem Trockenmassegehalt 35 und der Detektion eines Gehalts erdiger Verunreinigung 36 beigegeben.

So kann die Abgabe der mittleren Dosiermenge, die mittels des Kennfeldes 34 quantifiziert wird, in Abhängigkeit vom Überschreiten des ersten Schwellwertes für den Trockenmassegehalt 35 und dem Unterschreiten des ersten Schwellwertes für den Gehalt an erdigen Verunreinigungen 36 angesteuert werden.

Weiterhin kann die Abgabe der mittleren Dosiermenge, die mittels des Kennfeldes 34 quantifiziert wird, in Abhängigkeit von der Einhaltung des optimalen Wertes für den Trockenmassegehalt 35 und dem Überschreiten des ersten Schwellwertes für den Gehalt an erdigen Verunreinigungen 36 angesteuert werden.

Durch die Abgabe der mittleren Dosiermenge kann der Gefahr einer Fehlgärung und/oder der Bildung von Buttersäure begegnet werden, die dadurch entstehen kann, wenn einer der beiden Parameter, Trockenmassegehalt 35 oder Gehalt an erdigen Verunreinigungen 36, im optimalen Bereich liegt, der andere Parameter jedoch nicht im optimalen Bereich liegt.

Der Gehalt an erdigen Verunreinigungen 36 im Erntegut 20 wird mittels der Bildauswerteeinheit 33 der Steuerungsvorrichtung 16 durchgeführt. Das Vorhandensein und der Gehalt an erdigen Verunreinigungen 36 wird durch die Bildauswerteeinheit 33 mittels eines Maschinenlernalgorithmus bestimmt.

Zur Analyse der durch die Kamera 18 erzeugten Bilddaten des Erntegutes 20 wird durch den Maschinenlernalgorithmus zumindest ein trainierbares neuronales Netzwerk verwendet.

Die Benutzerschnittstelle 19 kann weiterhin über eine Anzeige für sämtliche mit der Hilfsmittelzugabe in Verbindung stehenden Informationen verfügen. Im Rahmen des Auftragsmanagements der Erntemaschine 1 respektive des Feldhäckslers 30 können relevante Daten, insbesondere die Zugabemengen an Hilfsmitteln 11, 12, dokumentiert werden. Die Dokumentation kann dabei bevorzugt ortsbezogen erfolgen, wozu beispielsweise eine Ortung über ein geeignetes Ortungssystem des Feldhäckslers 30 genutzt werden kann. Umgekehrt könnten auch für die Hilfsmitteldosierung - neben den sensorisch erfassten Ernteguteigenschaften - Ortungsinformationen herangezogen werden, um ein georeferenziertes Zugeben der Hilfsmittel 11, 12 durchzuführen. Auf diese Weise könnten in der Praxis beispielsweise ganz gezielt nur auf Teilflächen der zu bearbeitenden Fläche 27 Hilfsmittel 11, 12 in unterschiedlicher Dosierung zugegeben werden.

Letzteres kann insbesondere dann relevant sein, wenn das Auftreten von erdigen Verunreinigung beispielsweise durch Wildtierschäden verursacht ist, welche vor dem Ernteprozess, beispielsweise durch das Überfliegen der zu bearbeitenden Fläche 27 mit einer Drohne, erfasst und dokumentiert wurde. Das durch Wildtierschäden verursachte Auftreten von erdigen Verunreinigung kann räumlich sehr stark variieren. Beispielsweise ist nur eine von mehreren Flächen 27 von Wildtieren geschädigt worden oder gar nur eine Teilfläche. Oder aber auf vielen Flächen 27 sind nur sehr vereinzelt kleine Schäden vorhanden.

**Bezugszeichenliste**

| | | | |
|---|---|---|---|
| 1 | Erntemaschine | 34 | Kennfeld |
| 2 | Vorsatzgerät | 35 | Trockenmassegehalt |
| 3 | Einzugsaggregat | 36 | Gehalt erdige Verunreinigungen |
| 4 | Häckseltrommel | | |
| 5 | Konditioniereinrichtung | D | Dosiermenge |
| 6 | Nachbeschleuniger | Dₘᵢₙ | Minimale Dosiermenge |
| 7 | Förderschacht | Dₘₐₓ | Maximale Dosiermenge |
| 8 | Überladeeinrichtung | | |
| 9 | Auswurfklappe | | |
| 10 | Fahrerkabine | | |
| 11 | Hilfsmittel/Siliermittel | | |
| 12 | Hilfsmittel/Wasser | | |
| 13 | Mischeinheit | | |
| 14 | Förderpumpe | | |
| 15 | Injektor | | |
| 16 | Steuerungsvorrichtung | | |
| 17 | NIR-Sensor | | |
| 18 | Kamera | | |
| 19 | Benutzerschnittstelle | | |
| 20 | Erntegut | | |
| 21 | Behälter | | |
| 22 | Behälter | | |
| 23 | Durchflussmesser | | |
| 24 | Durchflussmesser | | |
| 25 | Durchflussmesser | | |
| 26 | Siliermittelanlage | | |
| 27 | Fläche | | |
| 28 | Sensoranordnung | | |
| 29 | Gehäuse | | |
| 30 | Feldhäcksler | | |
| 31 | Recheneinheit | | |
| 32 | Speichereinheit | | |
| 33 | Bildauswerteeinheit | | |

## Patentansprüche

1. Verfahren zur Aufbereitung von landwirtschaftlichem Erntegut (20), welches als Gutstroms durch zumindest ein Arbeitsaggregat (3, 4, 5, 6) einer landwirtschaftlichen Erntemaschine (1), insbesondere eines Feldhäckslers (30), gefördert wird, wobei dem Erntegutstrom zumindest ein dessen Qualität begünstigendes Siliermittel (11) durch eine entlang des Erntegutstromverlaufes angeordnete Siliermittelanlage (26) zugegeben wird und wobei zumindest zwei Eigenschaften des Ernteguts (20) durch zumindest eine Sensoranordnung (28) erfasst und von einer Steuerungsvorrichtung (16) ausgewertet werden, um eine Dosiermenge (D) des zumindest einen Siliermittels (11) in Abhängigkeit der erfassten Eigenschaften des Ernteguts (20) zu dosieren, **dadurch gekennzeichnet, dass** die Einstellung der Dosiermenge (D) des zumindest einen Siliermittels (11) fortlaufend in Abhängigkeit vom durch die Steuerungsvorrichtung (16) bestimmten Trockenmassegehalt (35) und einem Gehalt an erdigen Verunreinigungen (36) im Erntegut durchgeführt wird.

2. Verfahren nach Anspruch 1, **dadurch gekennzeichnet, dass** die Dosiermenge (D) des zumindest einen Siliermittels (11) mittels der Siliermittelanlage (26) durch die Steuerungsvorrichtung (16) in Abhängigkeit von zumindest einem in der Steuerungsvorrichtung (16) hinterlegten und/oder durch die Steuerungsvorrichtung (16) zu bestimmenden dreidimensionalen Kennfeld (34) angesteuert wird, in welchem die Dosiermenge (D) des zumindest einen Siliermittels (11) in Abhängigkeit vom Trockenmassegehalt (35) und dem Gehalt an erdigen Verunreinigungen (36) aufgetragen ist.

3. Verfahren nach Anspruch 2, **dadurch gekennzeichnet, dass** zur Bestimmung des zumindest einen dreidimensionalen Kennfeldes (34) eine minimale Dosiermenge (Dₘᵢₙ) und eine maximale Dosiermenge (Dₘₐₓ) vorgegeben werden.

4. Verfahren nach Anspruch 3, **dadurch gekennzeichnet, dass** die Vorgabe der minimalen Dosiermenge (Dₘᵢₙ) und maximalen Dosiermenge (Dₘₐₓ) manuell mittels einer Benutzerschnittstelle (19) durchgeführt wird.

5. Verfahren nach Anspruch 3 oder 4, **dadurch gekennzeichnet, dass** durch die Steuerungsvorrichtung (16) in Abhängigkeit von spezifischen Eigenschaften des zumindest einen Siliermittels (11) zumindest eine Empfehlung für die minimale Dosiermenge (Dₘᵢₙ) und die maximale Dosiermenge (Dₘₐₓ) vorgegeben wird.

6. Verfahren nach einem der vorangehenden Ansprüche, **dadurch gekennzeichnet, dass** der Erntegutstrom zur Bestimmung der Eigenschaft "Trockenmassegehalt des Erntegutes (35)" durch einen NIR-Sensor (17) und zur Bestimmung der Eigenschaft "Gehalt an erdigen Verunreinigungen (36)" im Erntegut (20) durch eine Kamera (18) erfasst werden.

7. Verfahren nach Anspruch 6, **dadurch gekennzeichnet, dass** die Eigenschaft Trockenmassegehalt (35) und Gehalt an erdigen Verunreinigungen (36) im Erntegut (20) zeitgleich durch den NIR-Sensor (17) und die Kamera (18), die nebeneinander in einem gemeinsamen Gehäuse (29) angeordnet sind, erfasst werden, wobei das Gehäuse (29) an einer zur Abgabe des Erntegutes (20) ausgeführten Überladevorrichtung (8) der Erntemaschine (1) angeordnet ist.

8. Verfahren nach Anspruch 6 oder 7, **dadurch gekennzeichnet, dass** der Gehalt an erdigen Verunreinigungen (25) im Erntegut (20) mittels einer Bildauswerteeinheit (33) der Steuerungsvorrichtung (16) durchgeführt wird, wobei das Vorhandensein und der Gehalt an erdigen Verunreinigungen (36) durch die Bildauswerteeinheit (33) mittels eines Maschinenlernalgorithmus bestimmt wird.

9. Verfahren nach Anspruch 8, **dadurch gekennzeichnet, dass** zur Analyse von durch die Kamera (18) erzeugten Bilddaten des Erntegutes (20) durch den Maschinenlernalgorithmus zumindest ein trainierbares neuronales Netzwerk verwendet wird.

10. Verfahren nach einem der Ansprüche 3 bis 9, **dadurch gekennzeichnet, dass** die Abgabe der minimalen Dosiermenge (Dₘᵢₙ) in Abhängigkeit von der Einhaltung eines optimalen Wertes für den Trockenmassegehalt (35) und eines ersten Schwellwertes für den Gehalt an erdigen Verunreinigungen (36) angesteuert wird.

11. Verfahren nach Anspruch 10, **dadurch gekennzeichnet, dass** die Abgabe der maximalen Dosiermenge (Dₘₐₓ) in Abhängigkeit vom Überschreiten eines ersten, vom optimalen Wert abweichenden, Schwellwertes für den Trockenmassegehalt (35) und des ersten Schwellwertes für den Gehalt an erdigen Verunreinigungen (36) angesteuert wird.

12. Verfahren nach Anspruch 11, **dadurch gekennzeichnet, dass** die Abgabe einer mittleren Dosiermenge, die mittels des Kennfeldes (34) quantifiziert wird, in Abhängigkeit vom Überschreiten des ersten Schwellwertes für den Trockenmassegehalt (35) und dem Unterschreiten des ersten Schwellwertes für den Gehalt an erdigen Verunreinigungen (36) angesteuert wird.

13. Verfahren nach einem der Ansprüche 9 bis 12, **dadurch gekennzeichnet, dass** die Abgabe einer mittleren Dosiermenge, die mittels des Kennfeldes (34) quantifiziert wird, in Abhängigkeit von der Einhaltung des optimalen Wertes für den Trockenmassegehalt (35) und dem Überschreiten des ersten Schwellwertes für den Gehalt an erdigen Verunreinigungen (36) angesteuert wird.

14. Siliermittelanlage (26) für eine landwirtschaftliche Erntemaschine (1), insbesondere Feldhäcksler (30), wobei die Siliermittelanlage (26) zumindest einen Behälter (21) für zumindest ein Siliermittel (11), eine Mischeinheit (13), eine Förderpumpe (14) sowie eine Injektoreinheit (15) zur Abgabe des zumindest einen Siliermittels (11) aufweist, wobei zur Ansteuerung der Mischeinheit (13) eine Steuerungsvorrichtung (16) vorgesehen ist, wobei zur Erfassung zumindest zweier Eigenschaften des Ernteguts (20) zumindest eine Sensoranordnung (28) vorgesehen ist, deren Daten von der Steuerungsvorrichtung (16) ausgewertet werden, um die von der Mischeinheit (13) abgegebene Dosiermenge (D) des zumindest einen Siliermittels (11) in Abhängigkeit der erfassten Eigenschaften des Ernteguts (20) zu dosieren, **dadurch gekennzeichnet, dass** die Steuerungsvorrichtung (16) dazu eingerichtet und ausgeführt ist, die Einstellung der Dosiermenge (D) des zumindest einen Siliermittels (11) in Abhängigkeit vom durch die Steuerungsvorrichtung (16) bestimmten Trockenmassegehalt (35) und einem Gehalt an erdigen Verunreinigungen (36) im Erntegut (20) durchzuführen.

15. Landwirtschaftliche Erntemaschine (1), insbesondere Feldhäcksler (30), welche einen Gutstrom mit Erntegut (20) durch zumindest ein Arbeitsaggregat (3, 4, 5, 6) durch die Erntemaschine (1) fördert, wobei dem Erntegutstrom eine entlang des Erntegutstromverlaufes angeordnete Siliermittelanlage (26) zumindest ein dessen Qualität begünstigendes Siliermittel (11) zugibt und wobei zur Erfassung zumindest zwei Eigenschaften des Ernteguts (20) zumindest eine Sensoranordnung (28) vorgesehen ist, welche Daten einer Steuerungsvorrichtung (16) zur Auswertung zuführt, um die Dosiermenge (D) des zumindest einen Siliermittels (11) in Abhängigkeit der erfassten Eigenschaften des Ernteguts (20) zu dosieren, **dadurch gekennzeichnet, dass** die Erntemaschine (D) zur Durchführung des Verfahrens nach einem der Ansprüche 1 bis 13 eingerichtet und die Siliermittelanlage (26) nach Anspruch 14 ausgeführt ist.
